# EUROPEAN PATENT SPECIFICATION

(11) **EP 0 842 859 B1**
(45) Date of publication and mention of the grant of the patent: **21.08.2002**
(21) Application number: 97118222.5
(22) Date of filing: 21.10.1997
(51) Int. Cl.: B65D 23/00, B29C 49/52

(54) **Plastic bottle and method for manufacturing and packaging thereof**
Kunststoffflasche und Verfahren zu ihrer Herstellung und Verpackung
Bouteille en matière plastique et procédé de sa fabrication et conditionnement

(30) Priority: 15.11.1996 IT GE960101
(43) Date of publication of application: 20.05.1998
(73) Proprietor: SARDA ACQUE MINERALI S.p.A., 09047 Selargius (IT); MELONI, Gianfranco, 09047 Selargius (IT)
(72) Inventor: Meloni, Gianfranco, 09047 Selargius, Province of Gagliari (IT)
(74) Representative: Porsia, Bruno

(56) References cited:
- EP-A- 0 641 719
- EP-A- 0 698 557
- WO-A-91/00227
- WO-A-92/16412
- DE-A- 3 015 014
- FR-A- 2 219 885
- FR-A- 2 554 786
- FR-A- 2 574 757
- US-A- 3 263 847
- US-A- 3 550 197
- US-A- 3 920 503
- SZAJNA: "What every designer of plastic bottles should know about structure" PLASTICS ENGINEERING, vol. 37, no. 3, March 1981, NEW HAMPSHIRE, USA, pages 83-87, XP002056849
- FR235230 Design Model(VITTEL)18 July 1986 XP002058062
- Certificat de depot International Nr. 008075 (VITTEL) 16 January 1987 XP002058063

## Description

The present invention relates to a plastic bottle, in particular for mineral water or similar drinks, which can be closed by means of a cap, for example of the screw type, provided with sealing means, and which has all the marketing and/or legally required information necessary for identification of the product intended for it, formed directly, by means of deformation or similar modification, on the wall of said bottle, and in which in the vicinity of the bottom end of the bottle a transversal groove is formed in the wall of said bottle and a radial recess is arranged inside said groove so as to provide receiving means for cutting means associated with the bottle to perform the separation between the bottom portion of the bottle and the bottle itself, according to the pre-characterizing portion of claim 1.

A plastic bottle of this kind is known from the document WO92/16412. The document EP 0641719 A1 describes a bottle provided with a plurality of breakable wall portions in the form of longitudinal bands extending along the central axis of the bottle and body wall portions.

The bottle according to the invention is characterized in that in order to confer an expansion possibility to the bottle and thus an easily stacking possibility of several bottles on top of one another, the bottle has one or more open folds along the side walls or one or more longitudinal grooves as receiving means for cutting means.

Further advantages and the characteristic features of the present invention will emerge more clearly from the following description of an embodiment thereof provided, by way of a non-limiting example, with reference to the accompanying plates of drawings, in which:
Figure 1 is an elevation view of a bottle known from the prior art (cf. for example, "Plastics engineering", vol.37, no. 3, March 1981).
Figure 2 is a longitudinally sectioned view of a portion of the mould used in the method according to the invention for manufacturing bottles, with the corresponding bottle portion;
Figure 3 is a longitudinally sectioned view of a detail of Figure 2, on a larger scale;
Figures 4 and 5 schematically show side elevation views of overall bottle designs covered by the present invention;
Figure 6 is a longitudinally sectioned view of a detail of a bottle of the type illustrated in Figure 4, together with means for separating the base-piece of the said bottle;
Figure 7 is a transversely sectioned view along the line XI-XI of Figure 6;
Figure 8 is a side elevation view of a bottle according to a first embodiment of the invention;
Figure 9 is a longitudinally sectioned view of a detail of a bottle of the type illustrated in Figure 8, together with means for separating the base-piece of the said bottle;
Figure 10 is a view illustrating the compacting system after use of the bottles of the type similar to that illustrated in Figure 8;
Figure 11 is a side elevation view of a bottle according to a second embodiment of the invention;
Figures 12A and 12B are two transversely sectioned views according to lines A and B respectively of the bottle of figure 11;
Figure 13 is a view illustrating the compacting system after use of the bottles of the type similar to that illustrated in Figure 11;
Figure 14 is a view of a longitudinally sectioned detail of a further embodiment of the bottle according to the invention;
Figure 15 is a view of a longitudinally sectioned detail of a further variation of embodiment;
Figure 16 is a sectional view which illustrates the system for combining with one another bottles of the type illustrated in Figure 15;
Figure 17 is a plane bottom view of another further embodiment of the bottle of the invention; and
Figures 18 and 19 are views of longitudinally sectioned details of the bottle according to figure 17.

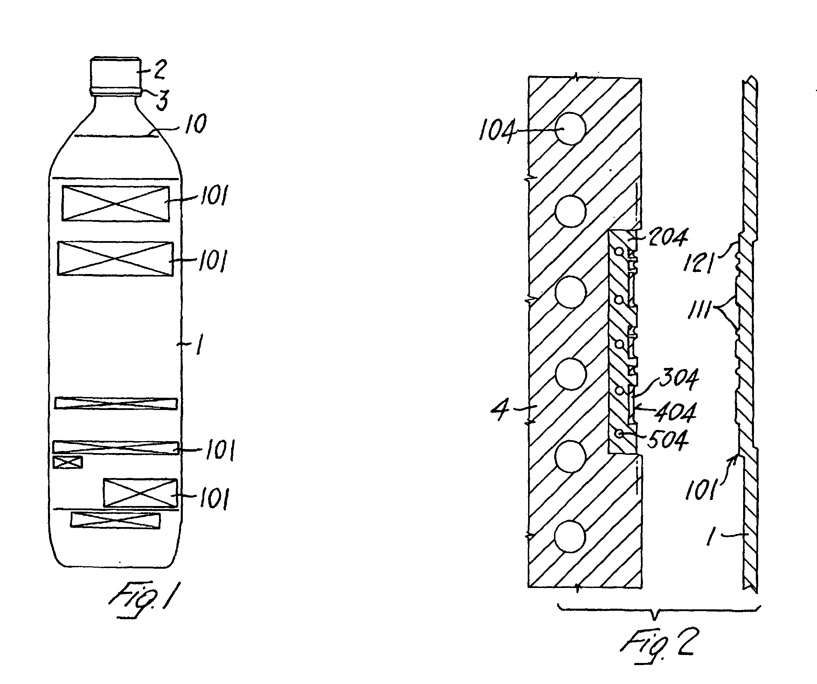

In Figure 1, 1 denotes a prior art bottle. Said bottle, containing a liquid 10, in particular water, has on its surface the label areas 101 with, directly formed on them, the graphic and/or text elements necessary for commercial identification and display of the legally required data, such as expiry date, composition and other analytical statistics relating to the product 10 contained in the bottle 1. The bottle is moreover closed by means of a cap and said cap has sealing means 3.

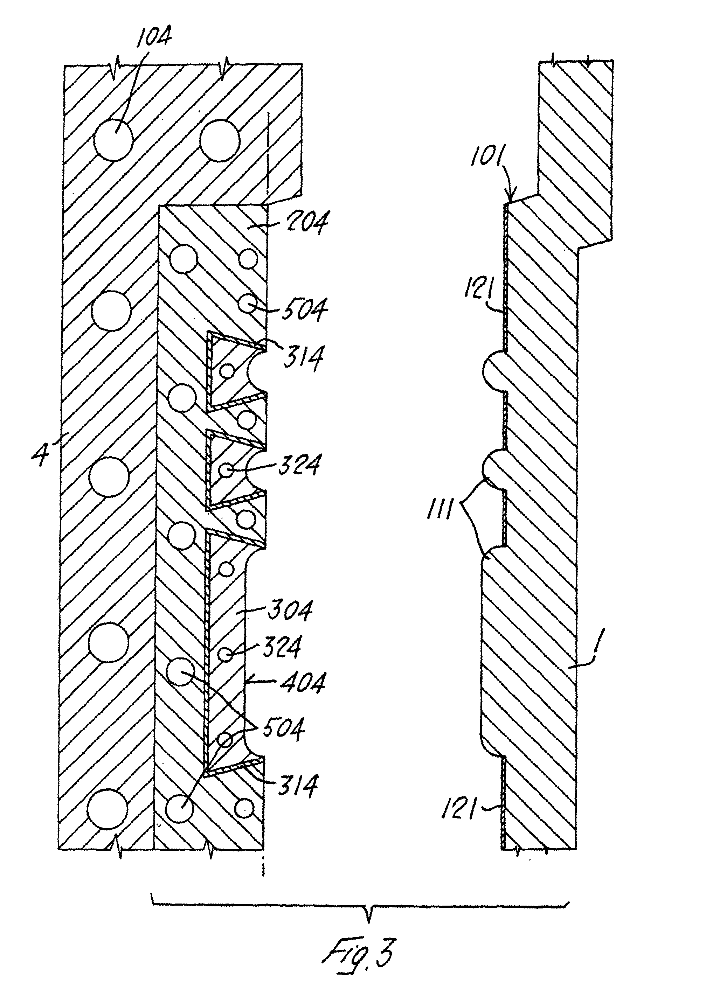

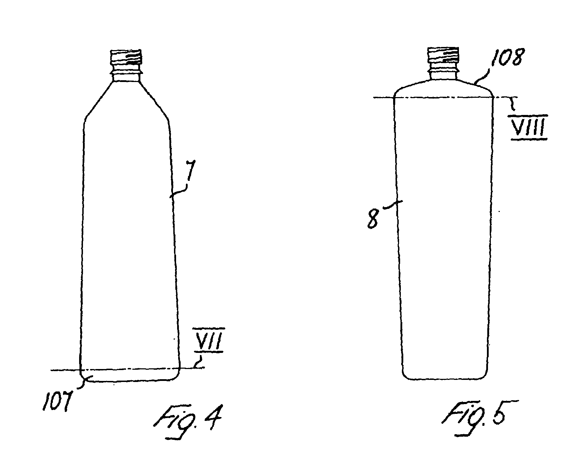

Figure 2 shows a longitudinally sectioned view of a portion of a mould of the type used in the method according to the invention for manufacturing bottles with, facing it, a portion of the wall of the bottle 1. The mould 4 has cooling channels 104, of the type known per se. In the zone where the die 404 for the characters and/or graphic elements 111 on the area 101 of the bottle 1 is formed, there is a varied-cooling system, i.e. a block 204 in which there are formed channels 504, the circuit of which is separate from that of the channels 104 of the mould. As illustrated more clearly in Figure 3, the background zones 121 of the label area 101 on the surface of the bottle 1 are cooled by means of the circuit 504 formed in the block 204, whereas the graphic elements or characters 111, which are contained in the block 304, isolated from the block 204 by means of the layer 314 of insulating material, are cooled homogeneously with the remainder of the bottle 1. The channels 324 of the block 304 are connected, on the other hand, to the primary cooling circuit, i.e. to the channels 104.

The difference in cooling results, as is known, to considerable differences in the aggregation, and consequently in the external appearance of the parts thus treated. In particular, if cooling of the background zones 121 is performed at lower temperatures and hence more rapidly, the background 121 of the area 101 will appear more opaque (dotted line in the cross-section of Figure 3) than the rest of the bottle 1 and the characters or graphic elements 111, which instead will be shinier. All this results in an improvement in the visibility and legibility of the information arranged, in the form of a label, on the surface of the bottle.

Cooling of the mould may be performed in a known manner, using water or other cooling fluids within an average temperature range (10-60°C) as regards the so-called primary circuit consisting of the channels 104; cooling in the secondary circuit of the channels 504 of the block 204 will be performed at significantly lower temperatures, for example using liquid nitrogen or liquid air. Obviously, the procedure may be reversed, namely more opaque writing may be formed on a shinier background. Alternatively, in order to obtain the same results, heating or rapid super-heating may be performed by means of the channels 504, useful for obtaining the aforementioned differentiation.

The differentiation between the background of the label formed directly on the surface of the bottle and the graphic elements and/or characters contained thereon may also be obtained by means of operations of a mechanical type, for example by performing glossing or sandblasting of the background compared to the characters or vice-versa. Moreover, electrical or electronic treatment may be envisaged, which is also able to achieve the same result, as well as laser or ultrasound treatment.

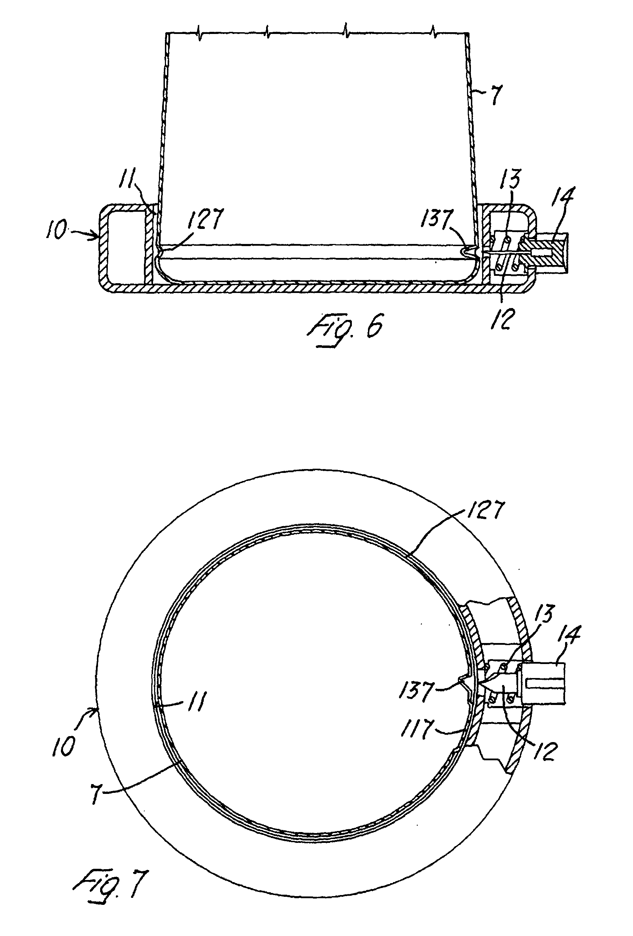

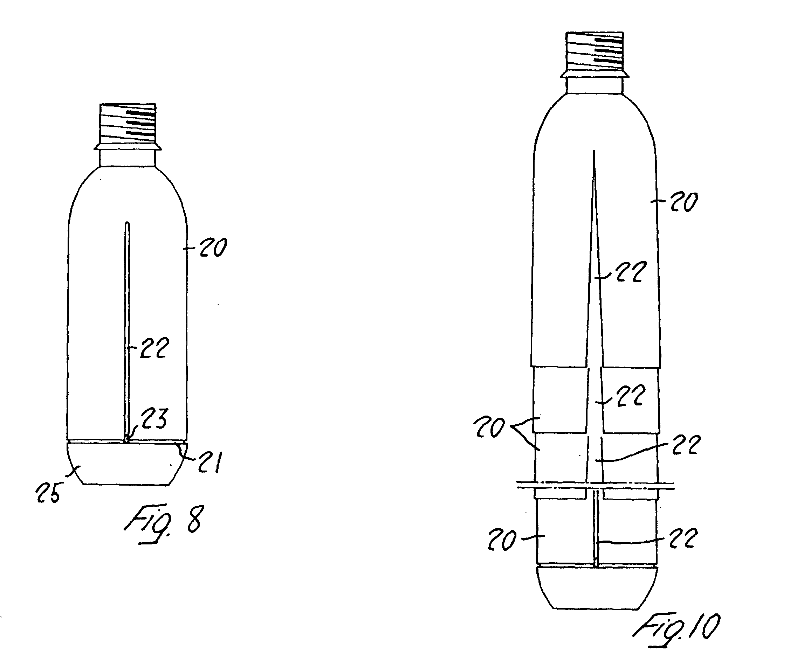

Figures 4 and 5 schematically illustrate two shape variations covered by the present invention. Both the bottle 7 of Figure 4 and the bottle 8 of Figure 5 are formed with a tapered tubular body; in the case of the bottle 7, tapering is from the bottom upwards, being exactly the opposite in the case of the bottle 8. In both cases, in the vicinity of the end with a larger cross-section, it is possible to separate partially from the remainder of the bottle a portion, respectively 107 and 108, along the respective lines VII and VIII. In this way, the bottles of the type illustrated in Figures 4 and 5, respectively, may be introduced inside one another, allowing a considerable saving in space in the containers which are to be collected for the purposes of recycling.

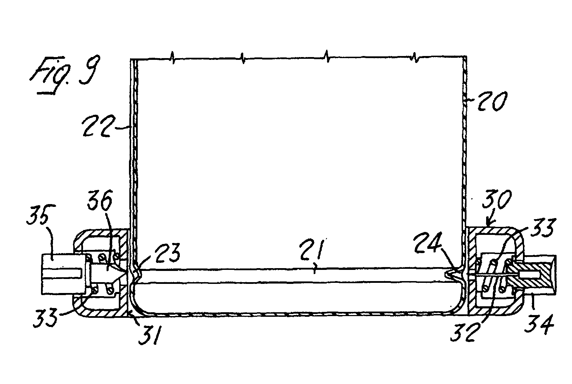

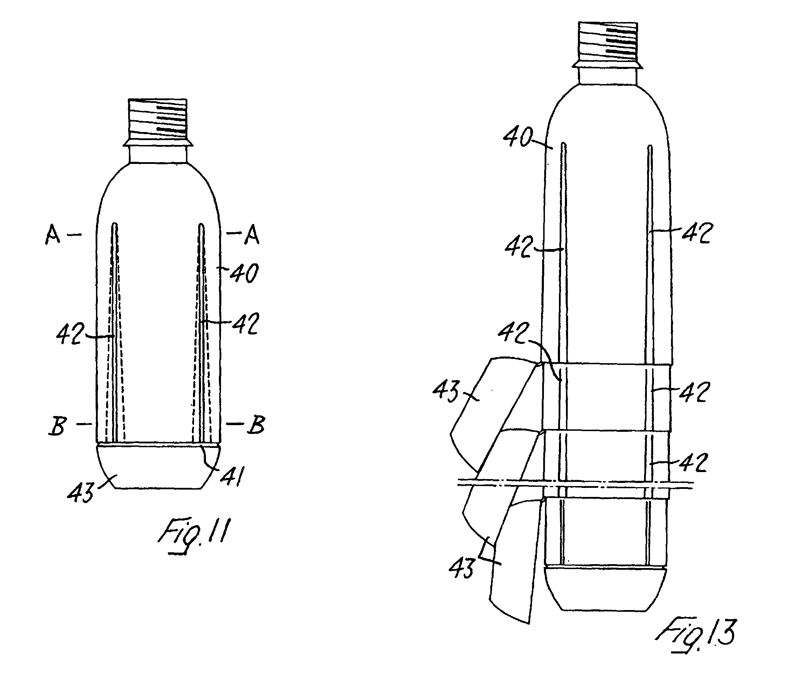

Figure 6 shows a detail of a bottle of the type illustrated in Figure 4, together with means for partial separation of the portion 107. The bottle 7 is inserted with its bottom into a cylindrical base 10 provided with an axial cavity 11 having a diameter matching the diameter of the bottom of the bottle 7. The portion 107 of the bottle is delimited by a groove 127; at a given point along the groove a radial recess 137 is formed. This recess favours the insertion of the blade 12 housed in the base 10 and mounted on a button 14 loaded by the spring 13. As can be noted in Figure 7, in which the same numbers correspond to the same parts, the recess 137 is formed alongside a strip 117 which is devoid of the groove 127.

Separation of the portion 107 is obtained simply by pressing the button 14 and thus causing the blade 12 to penetrate into the wall of the bottle opposite the recess 137. Then the user, maintaining the pressure, need only rotate the bottle through a little less than a round angle, in order to separate the portion 107 from the bottle 7 except for the strip 117 which keeps these elements connected together. Obviously it is possible to envisage many other types of means designed to perform the partial separation of the portions located in the vicinity of the larger-section end in the bottles of the type illustrated in Figures 4 and 5.

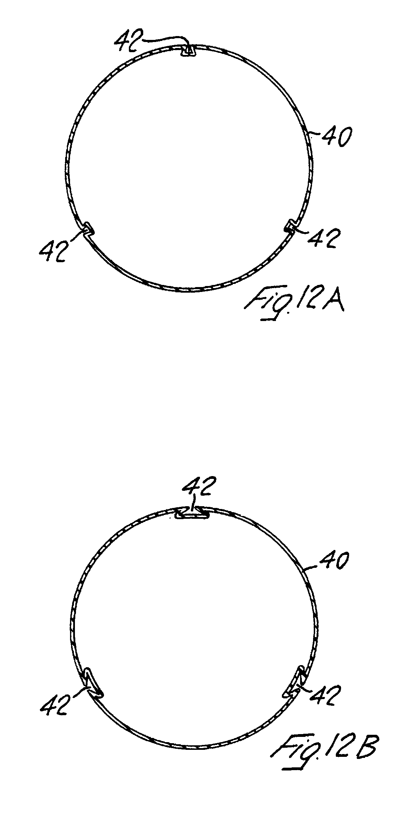

Figures 8 to 10 illustrate a bottle according to the present invention. Figure 8 shows a bottle 20 of substantially cylindrical symmetry, provided with a transverse groove 21 formed in the region of the bottom portion 25, similar to the groove 127 of the bottle 7 illustrated in Figure 4. The said bottle 20 is provided, moreover, with a longitudinal groove 22; at the intersection of this longitudinal groove with the transverse groove 21 a recess 23 is formed.

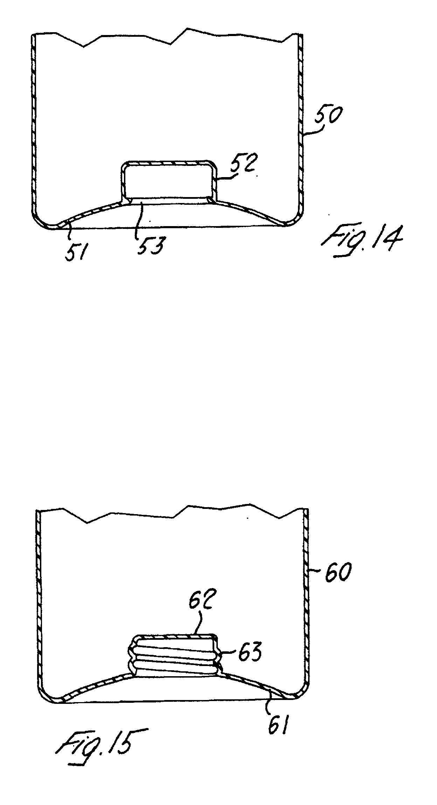

Figure 9 illustrates a cross-sectional detail of the bottle 20, together with the cutting means 30. As shown in the Figure, the cutting means comprise an annular element 30 provided with an open cylindrical cavity 31 inside which the bottle 20 is positioned. The blade 32 associated with the button 32 is directed towards the recess 24, in a manner entirely similar to that described previously with reference to Figure 6. An additional blade 36 is positioned in the element 30 in a diametrically opposite position, being arranged on a plane at right angles to that of the blade 32. This blade is directed towards the recess 23 located at the intersection of the groove 21 with the groove 22.

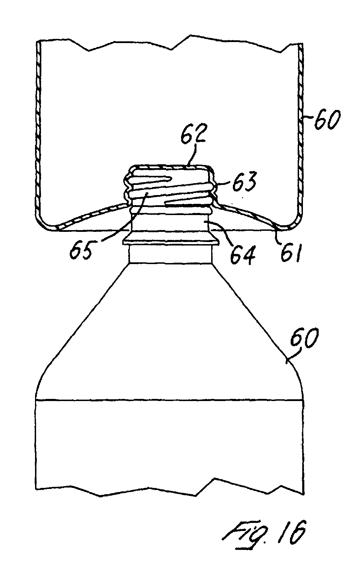

In practice, after removing, partially or totally, the bottom portion 25 of the bottle 20, pressing the button 35 and pushing the bottle downwards, the side wall of the bottle 20 can be cut along the groove 22. In this way, as illustrated in Figure 10, several cylindrical bottles may be stacked on top of one another without force.

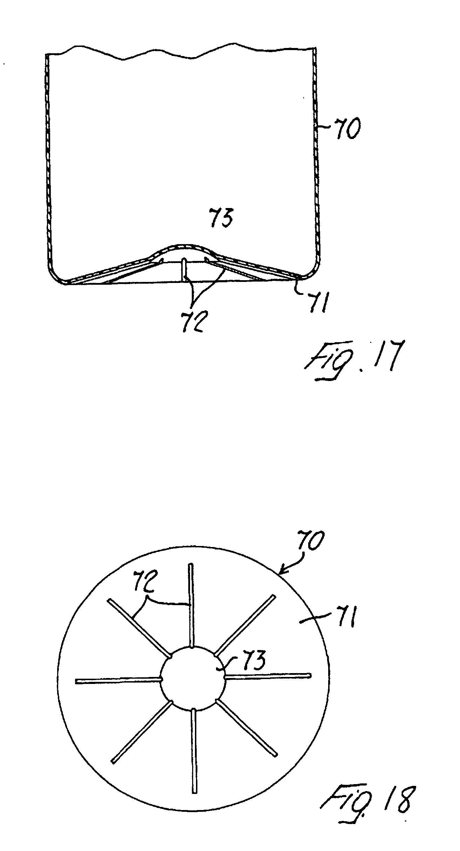

An entirely similar result may be obtained by means of the variation of embodiment illustrated in Figures 11 to 13. The bottom portion 43 of the bottle 40 in Figure 11 is also delimited at the top by the groove 41. The side walls of the bottle also have formed on them the open folds 42 which are made, as indicated by the broken lines in the figure, with a cross-section increasing towards the end of the bottle which is to be partially or totally removed, i.e. the bottom portion 43.

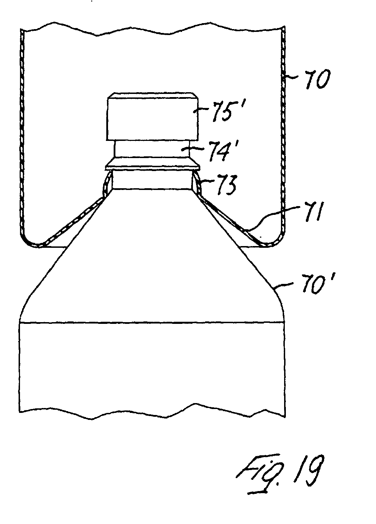

Figures 12A and 12B show more clearly the variation in the cross-section of the folds 42. In fact, the cross-section taken along the line A-A of Figure 11 and illustrated in Figure 12A is significantly smaller than that taken along the line B-B and illustrated in Figure 12B.

In this case also, after partial removal of the portion 43, the bottles 40, as illustrated in Figure 13, may be easily stacked on top of one another, thanks to the possibility of expansion conferred on the bottle 40 by the folds 42. Obviously, the folds 42 may be similarly formed with a constant cross-section or also formed with an extension other than the longitudinal extension, such as for example a helical extension. The bottle moreover may be designed for separation of an end portion, as illustrated in the figures, or also designed for separation into two substantially identical halves, the folds being advantageously formed with a cross-section increasing towards the centre of the bottle body and decreasing towards the ends. Moreover, the folds, shown directed towards the inside of the bottle in the figures described above, may also be formed directed towards the outside, in particular in bottles intended for gassy drinks.

Figure 14 illustrates a further variation of embodiment of the bottle according to the present invention. The bottom 51 of the bottle 50 is provided axially with a cavity 52 provided on its external edge with the annular relief 53 having a toothed profile. This cavity allows the insertion of the mouth of another bottle inside it, so as to be able to organise the bottles in long rows between the manufacturing stage and the subsequent packaging stage.

Similar to this solution is the variation illustrated in Figures 15 and 16, in which the bottom 61 of the bottle 60 has a cavity 62 provided on the inside with a thread 63. As shown by Figure 16, the thread 63 of the cavity 62 is coupled with the thread 65 formed on the mouth 64 of another similar bottle 60. This allows extremely firm fixing and at the same time this connection can be released very easily.

In Figures 17 and 18 is shown another embodiment of the present invention. A bottle 70 is provided, on its bottom 71, with several diametral grooves 72 formed on the surface of the said bottom 71. At the intersection of such grooves 72, there is provided a cavity directed to the inside of the bottle 70. In Figure 19 is shown a bottle 70' that penetrate into the bottle 70 throgh the bottom 71, crushing the said bottom 71 with its neck 74' provided with the cap 75'. In fact, the wall of the bottom 71 of the bottle 70 is weakened by the grooves 72 and by the cavity 73, so as to facilitate such a penetration.

By this way, several bottles can be coupled by this head-tail coupling, in a manner very similar to that shown in Figures 14 to 16. Moreover, a bottle for example provided with folds on its lateral surface or a bottle formed tapered from his mouth to its bottom, as described above, can advantageously provided with the groveed bottom as shown in Figures 17 to 19. The stacking of such a bottle can achieve excellent results.

## Claims

1. Plastic bottle, in particular for mineral water or similar drinks, which can be closed by means of a cap, for example of the screw type, provided with sealing means, and which has all the marketing and/or legally required information necessary for identification of the product intended for it, formed directly, by means of deformation or similar modification, on the wall of said bottle, and in which in the vicinity of the bottom end of the bottle a transversal groove (21, 41) is formed in the wall of said bottle and a radial recess is arranged inside said groove so as to provide receiving means for cutting means associated with the bottle to perform the separation between the bottom portion of the bottle and the bottle itself, **characterized in that** in order to confer an expansion possibility to the bottle and thus an easily stacking possibility of several bottles on top of one another, the bottle (20) has one or more open folds (42) along the side walls or one or more longitudinal grooves (22) as receiving means for cutting means.

2. Bottle according to claim 1, **characterized in that** the folds (42) have a cross-section increasing towards the bottom end of the bottle.

3. Bottle according to claim 1, **characterized in that** the radial recess (23) arranged in the transversal groove (21) is formed at the intersection between the transversal groove (21) and a longitudinal groove (22).

## Patentansprüche

1. Kunststofflasche, insbesondere für Mineralwasser oder ähnliche Getränke, die mittels einer Kappe verschlossen werden kann, zum Beispiel einer Schraubkappe, die mit Dichtmitteln versehen ist, wobei die Flasche alle die Marketing- und/oder gesetzlich erforderlichen Informationen hat, die für die Identifikation des Produktes, für das sie gedacht ist, aufweist, wobei die Information direkt mittels Deformation oder ähnlicher Modifikation auf der Wand der Flasche gebildet ist, wobei in der Nachbarschaft des Bodenendes der Flasche eine schräg hindurchverlaufende Nut (21, 41) in der Wand der Flasche geformt ist und eine radiale Ausriehmung innerhalb der Nut so angeordnet ist, daß Aufnahmemittel für Schneidmittel vorgesehen sind, welche der Flasche zugeordnet sind, um ein Trennen zwischen dem Bodenabschnitt der Flasche und der Flasche selbst durchzuführen, **dadurch gekennzeichnet, daß** dafür, der Flasche eine Ausdehnungsmöglichkeit zu erteilen und somit eine leichte Stapelmöglichkeit verschiedener Flaschen aufeinander zu geben, die Flasche (20) eine oder mehrer offene Falten (42) längs den Seitenwänden oder eine oder mehrere Längsnuten (22) als Aufnahmemittel für Schneidmittel hat.

2. Flasche nach Anspruch 1, **dadurch gekennzeichnet, daß** die Falten (42) einen Querschnitt haben, der zum Bodenende der Flasche hin zunimmt.

3. Flasche nach Anspruch 1, **dadurch gekennzeichnet, daß** die radiale Ausnehmung (23), welche in der schräg verlaufenden Nut (21) angeordnet ist, am Schnitt zwischen der trarisversalen Nut (21) und einer Längsnut (22) gebildet ist.

## Revendications

1. Bouteille en matière plastique, en particulier destinée à de l'eau minérale ou à des boissons similaires, qui peut être fermée au moyen d'un bouchon, par exemple du type vissant, muni d'un moyen d'étanchéité, et qui présente toutes les informations de commercialisation et/ou légalement requises nécessaires pour l'identification du produit destiné à celle-ci, formées directement, au moyen d'une déformation ou d'une modification similaire, sur la paroi de ladite bouteille, et où à proximité de l'extrémité de fond de la bouteille une rainure transversale (21, 41) est formée dans la paroi de ladite bouteille et un évidement radial est agencé à l'intérieur de ladite rainure de façon à réaliser un moyen de réception destiné au moyen de coupe associé à la bouteille afin d'exécuter la séparation entre la partie de fond de la bouteille et la bouteille elle-même, **caractérisé en ce que** de manière à conférer une possibilité d'expansion à la bouteille et ainsi une possibilité d'empilement aisé de plusieurs bouteilles les unes au-dessus des autres, la bouteille 20 présente un ou plusieurs replis ouverts (42) le long des parois latérales ou une ou plusieurs rainures longitudinales 22 en tant que moyen de réception pour le moyen de coupe.

2. Bouteille selon la revendication 1, **caractérisée en ce que** les replis (42) présentent une section transversale augmentant vers l'extrémité de fond de la bouteille.

3. Bouteille selon la revendication 1, **caractérisée en ce que** l'évidement radial (23) agencé dans la rainure transversale (21) est formé au niveau de l'intersection entre la rainure transversale (21) et la rainure longitudinale (22).
